# FASCICULE DE BREVET EUROPEEN

(11) **EP 2 520 202 B1**
(45) Date de publication et mention de la délivrance du brevet: **23.07.2014**
(21) Numéro de dépôt: 11164473.8
(22) Date de dépôt: 02.05.2011
(51) Int. Cl.: A47J 31/06, B65D 85/804

(54) **Dispositif et capsule pour la préparation d'une boisson**
Vorrichtung und Kapsel zur Herstellung eines Getränks
Device and capsule for preparing a beverage

(43) Date de publication de la demande: 07.11.2012
(73) Titulaire: Mocoffee AG, 8008 Zürich (CH)
(72) Inventeur: Favre, Eric, 1040 St-Barthélemy (CH)
(74) Mandataire: reuteler & cie SA

(56) Documents cités:
- WO-A1-2011/047836
- WO-A2-2010/041179
- BE-A6- 1 015 694

## Description

La présente invention concerne une capsule et un dispositif perforateur associé pour la préparation de boissons, notamment du café de type « café filtre ». Une capsule pour la préparation de boissons est connue du document WO 2010/041179.

Certains systèmes à capsule conviennent pour la préparation de café de type « espresso », ces cafés nécessitant une haute pression de 2 à 8 barres généralement. Pour des systèmes de préparation de café de type « café filtre » (aussi connu en anglais comme « brewed coffee»), la pression d'injection d'eau ne doit pas être trop élevée afin de ne pas générer une mousse, et les grains de café doivent être bien mouillés pour une bonne extraction. Dans des systèmes existants, afin d'assurer une bonne extraction du café contenu dans la capsule, les capsules sont très grandes et sont remplies que partiellement de café, parfois inférieur à 50% du volume de contenance. Le problème est d'assurer une bonne extraction avec peu de pression, puisque lorsque la capsule est très remplie, il y a des canaux préférentiels qui se forment et une partie du café n'est pas mouillée. Les capsules conventionnelles pour le café filtre sont très encombrantes, ce qui pose des problèmes pour leur stockage et transport, mais également pour les dimensions de la machine pour l'extraction du café. Il y a également un besoin de réduire la quantité de matériaux utilisés pour le conditionnement pour des raisons environnementales.

Un objet de l'invention est de fournir une capsule et un dispositif pour la préparation d'une boisson chaude par injection d'eau chaude dans la capsule qui est compacte et économe et qui permet un taux d'extraction élevé à basse pression.

Il est avantageux de fournir une capsule et un dispositif pour la préparation d'une boisson chaude qui utilise peu de matériaux de conditionnement.

Il est avantageux de fournir une capsule et un dispositif pour la préparation d'une boisson chaude qui peut travailler à basse pression pour la préparation d'un café filtre, tout en ayant un taux d'extraction élevé et avec une capsule compacte et bien remplie.

Il est avantageux de fournir une capsule et un dispositif pour la préparation d'une boisson chaude qui est fiable et qui permet d'obtenir une extraction consistante et reproductible d'une capsule à une autre.

Il est avantageux de fournir une capsule pour la préparation d'une boisson chaude utilisant des matériaux avec un faible impact environnemental et en de faibles quantités.

Des buts de l'invention sont réalisés par la capsule et dispositif perforateur selon la revendication 1.

Dans la présente on décrit une capsule et un dispositif perforateur d'une machine pour la préparation d'une boisson par injection d'eau dans la capsule, la capsule comprenant une paroi latérale et une paroi de fond formant une coque autoportante, une paroi supérieure renfermant un volume scellé dans la coque contenant une substance à extraire, et une membrane filtre dans le volume scellé disposé sur la paroi de fond. La paroi de fond comprend une partie périphérique et une partie centrale, la partie centrale s'étendant sous la membrane filtre d'une profondeur H3 non nulle et comprenant une partie de paroi basse configurée pour être perforée ou découpée par le dispositif perforateur afin de créer un ou plusieurs passages de sortie pour l'écoulement de la boisson traversant la membrane filtre. La partie périphérique comprend des canaux d'écoulement s'étendant essentiellement radialement de la partie de paroi basse vers la paroi latérale, interposés entre des rayons de support s'étendant jusqu'au niveau de la membrane filtre et formant des appuis pour la membrane filtre contre la pression de l'eau injectée dans la capsule et pressant sur la substance contenue dans la capsule.

Les rayons de support et les canaux d'écoulement forment une surface ondulé, les lignes génératrices des ondulations s'étendant essentiellement radialement de la partie centrale jusqu'à la paroi latérale. Des extrémités radialement intérieures des rayons de support entourent une chambre basse permettant à la partie de paroi basse d'être perforée et au dispositif perforateur de s'enfoncer dans la capsule sans perforer la membrane filtre.

Le dispositif perforateur comprend un élément perforant pour l'ouverture du fond de la capsule, l'élément perforant comprenant dans une forme d'exécution avantageuse une lame ayant une forme circulaire, ou essentiellement circulaire configurée pour découper une ouverture dans la partie de paroi basse de la paroi de fond. La lame peut avantageusement comporter des pointes de perforation sous forme de dents de scie.

L'élément perforant peut être monté sur l'extrémité libre d'un support tubulaire ayant un passage central d'écoulement.

Dans une forme d'exécution, la lame comprend une interruption de sorte à ce que la lame ne fait pas le tour complet, la lame étant configurée pour que la partie de paroi basse découpée ne se détache complètement du reste de la paroi de fond.

Selon une forme d'exécution avantageuse, le dispositif perforateur comprend un poussoir disposé dans le passage central, le poussoir étant amovible axialement dans une direction orthogonale à la membrane filtre configuré pour venir en appui contre la membrane filtre après perforation de la paroi de fond de la capsule.

Le poussoir peut comprendre une grille pour le passage du liquide à travers le poussoir.

Le dispositif perforateur peut avantageusement comporter une base comprenant une surface ondulée avec des rayons et des configurée pour une bonne assise et positionnement de la paroi de fond de la capsule.

D'autres buts et aspects avantageux de l'invention ressortiront des revendications ou de la description détaillée d'une forme d'exécution ci-après en référence aux figures annexées, dans lesquelles :
La Fig. 1 a est une vue en perspective et en coupe d'une capsule, sans paroi supérieure, et d'une partie perforatrice d'un dispositif pour la préparation d'une boisson, dans une position avant perforation, selon une forme d'exécution de l'invention ;
La Fig. 1b est une vue agrandie de la partie de fond de la capsule et du dispositif selon la Fig. 1a ;
La Fig. 2a est une figure similaire à la Fig. 1a, avec la partie perforatrice dans une position où le fond de la capsule a été perforé ;
La Fig. 2b est une vue en perspective et en coupe partielle d'une partie de paroi de fond de la capsule et de la partie perforatrice du dispositif dans une position de perforation;
La Fig. 3a est une vue en coupe d'une capsule, sans paroi supérieure, selon une forme d'exécution de l'invention ;

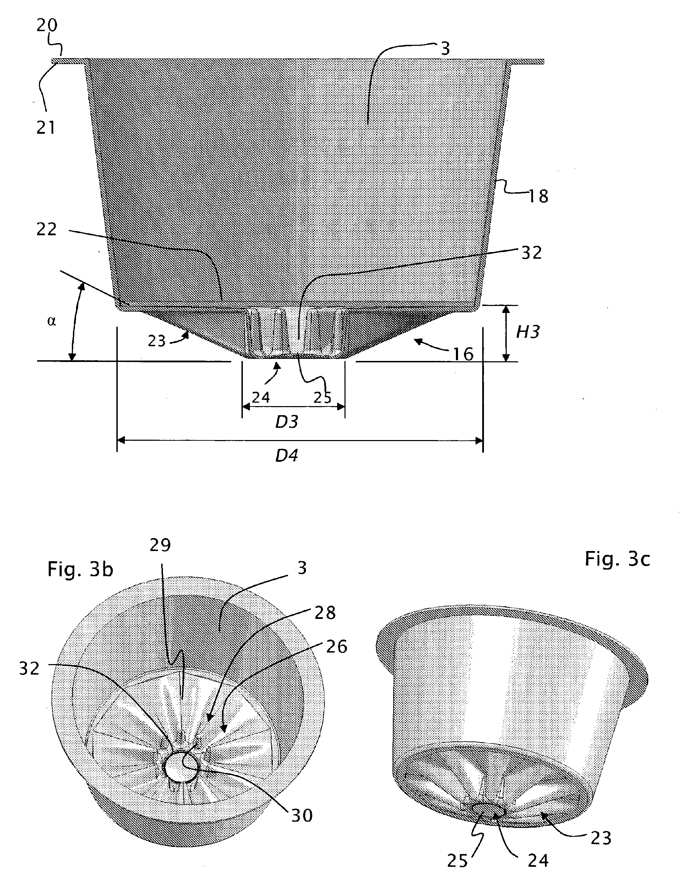

Les Figs 3b et 3c sont des vues en perspective de la capsule de la Fig. 3a, vues de dessus et de dessous, sans paroi supérieure et sans substance à extraire dans la capsule, le filtre à l'intérieur au fond de la capsule étant enlevé dans la Fig. 3b pour illustrer la paroi de fond de la capsule ;

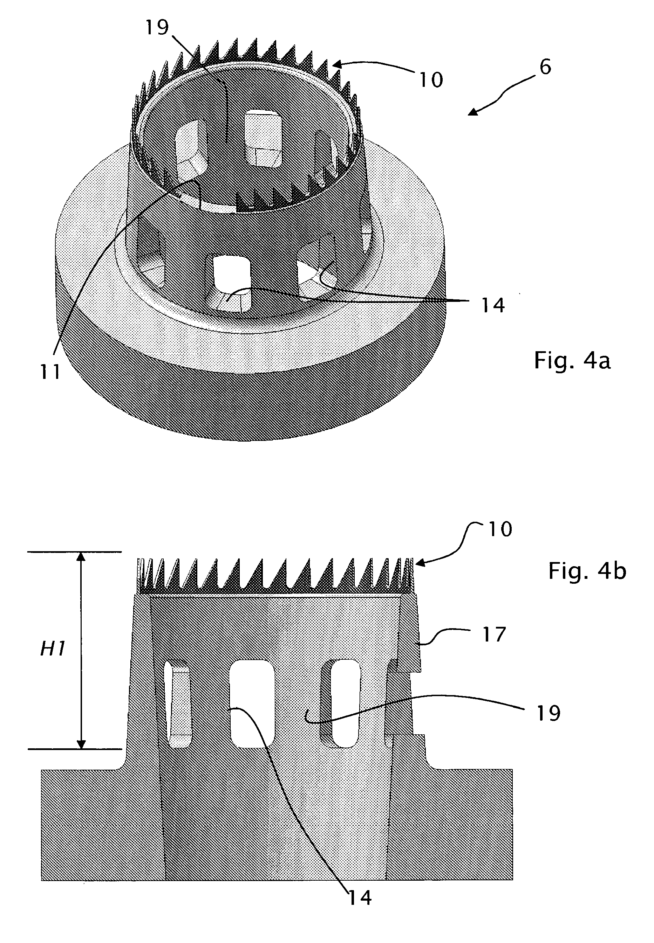

Les Figs 4a et 4b sont des vues en perspective, respectivement en coupe, de la partie perforatrice du dispositif de préparation d'une boisson selon une forme d'exécution à l'invention ;

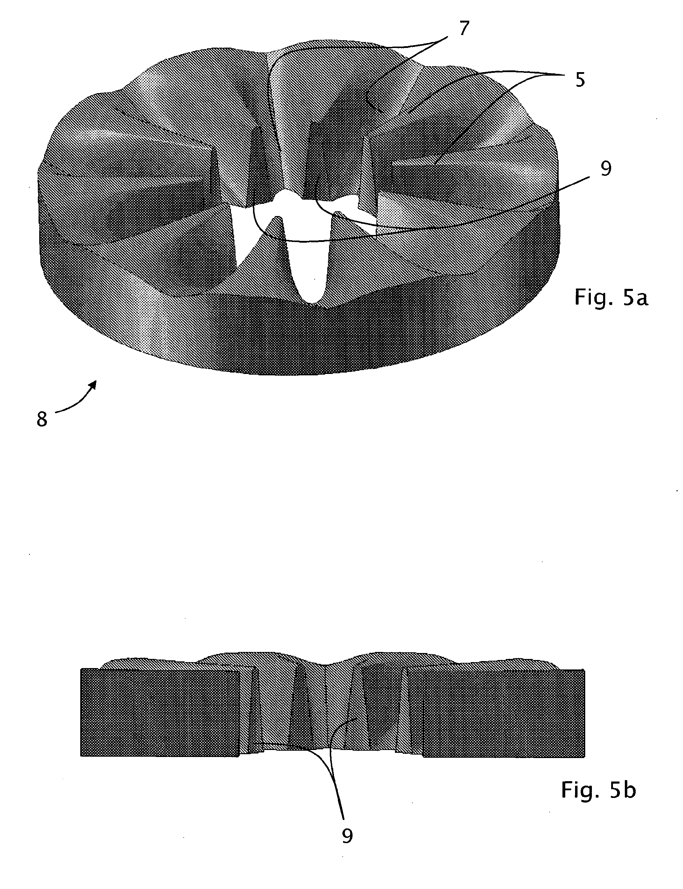

Les Figs 5a et 5b sont des vues en perspective, et respectivement en coupe, d'une paroi de fond d'un dispositif de préparation d'une boisson à partir d'une capsule selon une forme d'exécution de l'invention ; et

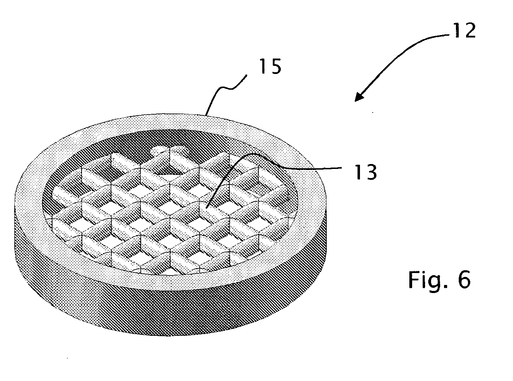

La Fig. 6 est une vue en perspective d'une pièce centrale de la partie perforatrice du dispositif selon une forme d'exécution de l'invention.

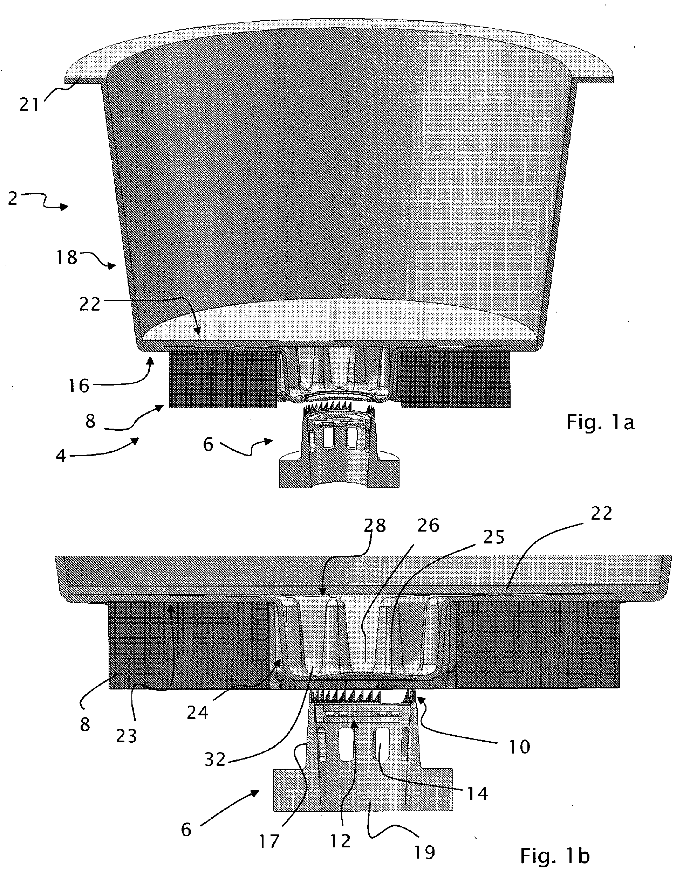

Faisant référence aux figures, une capsule 2 comprend un volume interne 3 contenant une substance à extraire (non illustrée) scellée hermétiquement dans le volume interne. Une machine pour la préparation d'une boisson, notamment une boisson chaude, associée à la capsule comprend un porte-capsule dédié dont une partie perforatrice 4 est illustrée dans les Figs 1 à 2b. La partie perforatrice 4 comprend une base 8 et un dispositif perforateur 6.

La capsule 2 comprend une paroi de fond 16, une paroi latérale 18 et une paroi supérieure (non-illustrée) soudées ou collées à la surface supérieure 20 d'un rebord 21 s'étendant radialement de la paroi latérale au côté opposé de la paroi de fond 16. La paroi latérale 18 peut avoir une forme légèrement conique. La paroi de fond et la paroi latérale ainsi que le rebord sont de préférence formées d'une seule pièce formant une coque semi-rigide autoportante. La paroi supérieure est de préférence sous forme d'une membrane flexible en une matière polymérique, par exemple en matière plastique multicouches laminée, la paroi étant soudée au rebord 21 par exemple par thermo soudage ou par soudage à ultrasons. Les parois de fond, latérale et supérieure permettent d'enfermer la substance pour la préparation d'une boisson, notamment les grains de café, dans le volume interne 3 de manière hermétique, permettant ainsi de conserver la fraîcheur de la substance pour une longue durée. Au lieu des grains de café, la substance à extraire peut aussi être des feuilles de thé, du lait en poudre, du chocolat en poudre, du bouillon lyophilisé, ou encore d'autres substances. La capsule et dispositif selon l'invention à toutefois une configuration particulièrement avantageuse pour la préparation d'un café de type café filtre à basse pression et générant peu de mousse.

La coque formée par la paroi latérale, la paroi de fond et le rebord peut être formée de matière plastique injectée ou d'une feuille en matière plastique multicouches thermoformée. La coque peut être formée entièrement en plastique comprenant par exemple du polypropylène, mais l'invention permet également avantageusement de former la coque en une matière autre que du plastique ou d'une combinaison de matériaux tels que des laminés comprenant du plastique. Notamment, d'autres matériaux qui peuvent être utilisés pour former la coque dans le cadre de cette invention sont des matériaux cellulosiques c'est-à-dire des matières formées de fibres semblables aux fibres utilisées dans la production de papier ou de carton. La matière cellulosique peut conférer une certaine rigidité et pourrait être munie d'une couche sur la surface intérieure du conteneur en matière plastique ou de cire alimentaire pour garantir l'étanchéité et réduire la diffusion de molécules à travers la paroi. La capsule peut avoir en outre une couche d'EVOH permettant de substituer l'aluminium, elle réduit la diffusion de molécule (oxygène) au travers du multicouche polypropylène.

La capsule comprend en outre une membrane filtre 22 disposée dans le volume interne 3 de la capsule au fond de la capsule, séparant les substances solides contenues dans le volume interne 3 du canal de sortie pour l'écoulement du liquide. La membrane filtre 22 peut avantageusement être posée contre la surface interne de la paroi de fond 16 et, dans une forme d'exécution préférée, s'étendant sur toute la surface interne définie par la périphérie de la paroi de fond rejoignant la paroi latérale 18. La membrane filtre 22 peut être de préférence collée en partie là où elle est en contact avec la surface de la paroi de fond de la capsule, par exemple en sa périphérie ou sur des lignes de rayons, afin d'éviter l'effondrement de la membrane filtre lorsqu'il y a une certaine pression appliquée par l'eau injectée dans la capsule. La membrane filtre peut être en un matériau cellulosique avec une porosité permettant de retenir les matières solides mais de laisser passer les liquides constituant la boisson à préparer à faible pression, notamment inférieur à 2 bars, ou encore inférieur à 1,5 bars. Cela permet notamment de préparer un café de type café filtre nécessitant un long temps de mouillage des grains de café et une extraction lente du café comparé à la préparation du café de type « espresso ». On évite aussi la formation d'une mousse excessive non voulu dans le café filtre.

La paroi de fond 16 comprend une partie centrale 24 et partie périphérique 23, la partie centrale s'étendant sous la partie périphérique 23 d'une profondeur H3. La partie centrale comprend une partie de paroi basse 25 configurée pour être perforée ou découpée par le dispositif perforateur 6 afin de créer un ou plusieurs passages de sortie pour l'écoulement de la boisson traversant la membrane filtre. La partie périphérique 23 comprend des canaux d'écoulement 26 s'étendant radialement de la partie centrale basse vers la paroi latérale, interposés entre des rayons de support 28 s'étendant jusqu'au niveau de la membrane filtre et formant des appuis pour la membrane filtre contre la pression de l'eau injectée dans la capsule et pressant sur la substance contenue dans la capsule afin de forcer le passage du liquide à extraire à travers le filtre. Les rayons de support 28 et les canaux d'écoulement 26 forment ainsi une surface ondulé, les lignes génératrices des ondulations s'étendant essentiellement radialement de la partie centrale jusqu'à la paroi latérale. La largeur Lx des rayons de support peut varier en fonction de la distance r du centre de la capsule afin de tenir compte de la largeur des canaux d'écoulement 26 pour le support du filtre afin d'éviter son effondrement en tout point de sa surface.

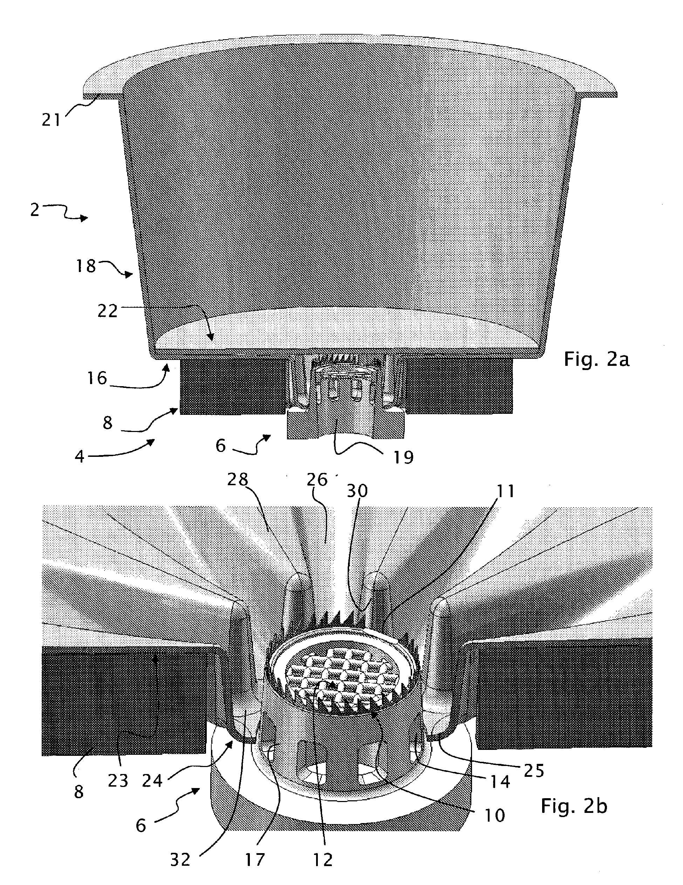

L'extrémité radialement intérieure 30 des rayons de support 25 entoure une chambre basse 32 permettant à la partie de paroi basse 25 de la paroi de fond d'être perforée et au dispositif perforateur 6 de s'enfoncer dans la capsule, tel qu'illustré dans les Figs 2a et 2b. La surface supérieure 29 des rayons de support 28 peut être essentiellement plane, légèrement bombée convexe, telle qu'illustrée, ou peut comprendre une surface non plane, telle qu'ondulée, ou comprenant des protubérances pour former des petits îlots ou points de support de la membrane filtre tout en laissant des espaces entre les protubérances ou plots pour le passage du liquide à travers le filtre et dans les canaux d'écoulement 26. On cherche à avoir une surface de la membrane filtre bien supportée par le fond de la capsule, tout en ayant une surface dégagée et libre pour le passage du liquide à travers la membrane filtre.

La membrane filtre 22 peut être collée ou fixée à la paroi de fond uniquement à sa périphérie circulaire, mais la membrane filtre peut également être collée ou soudée en plusieurs points ou selon des lignes radiales, là où elle est en contact avec la surface supérieure 29 des rayons de support.

La profondeur d'insertion *H1* maximale de l'élément perforateur 10 du dispositif perforateur dans la capsule par rapport à la partie de paroi basse 30 est de préférence entre 0,7 et 0,9 fois la profondeur H3 de la partie centrale. Le rapport *H3*/*D3* de la profondeur H3 de la partie centrale par rapport au diamètre *D3* de la partie centrale est avantageusement entre 1/3 et 2/3, de préférence entre 2/5 et 3/5. Le rapport *D3*/*D4* entre le diamètre D3 de la partie centrale 24 par rapport au diamètre D4 de la partie périphérique 23 se situe de préférence entre 1/3 et 1/5, avantageusement entre 3/10 et 3/12 pour avoir une grande surface de filtration périphérique et une ouverture d'écoulement centrale bien dégagée. L'angle d'inclinaison *α* des canaux d'écoulement par rapport au plan de la membrane filtre 22 se situe de préférence entre 10° et 30°, avantageusement entre 13° et 23° afin d'avoir une pente assurant un bon écoulement du liquide traversant le filtre toute en ayant une capsule avec une forme compacte et stable.

Le dispositif perforateur 6 comprend un élément perforant 10 pour l'ouverture du fond de la capsule. Dans la forme d'exécution illustrée, l'élément perforant 10 comprend avantageusement une lame ayant une forme circulaire, ou essentiellement circulaire, avec des pointes de perforation pour découper une ouverture essentiellement circulaire dans la partie de paroi basse 25 de la paroi de fond 16. Les pointes de perforation dans la forme d'exécution illustrée sont sous forme de dents de scie. L'élément perforant 10 est monté sur l'extrémité libre d'un support tubulaire 17 formant un passage central d'écoulement 19. Lors de la préparation d'une boisson, l'eau est injectée à travers la paroi supérieure par une tête injectrice perforante (non-illustrée) dans le volume interne. La paroi de fond 16 de la capsule peut être perforée en trois différents moments dépendant du type de boisson à préparer et des paramètres d'opération de la machine : avant l'injection d'eau, au même moment que le début d'injection d'eau, ou avantageusement après le début d'injection d'eau pour assurer un temps de mouillage définie de la substance dans la capsule avant l'écoulement de la boisson hors de la capsule.

Lors de la perforation de la partie de paroi basse, le support tubulaire 17 ainsi que la lame 10 s'enfoncent dans la chambre basse 32. Le support tubulaire 17 est muni d'une pluralité d'orifices latéraux 14 permettant à la boisson s'écoulant à travers le filtre de couler le long des canaux 26 et sortir de la capsule par les orifices latéraux 14 situé à la hauteur du point bas de la chambre basse et de descendre ensuite dans le passage central 19 à une sortie d'écoulement de la machine (non-illustrée).

La lame circulaire 10 peut, dans une forme d'exécution, avantageusement comprendre une interruption 11 de sorte à ce que la lame ne fait pas le tour complet, afin que la partie de paroi basse découpée ne se détache complètement du reste de la paroi de fond.

Le dispositif perforateur 6 peut en outre avantageusement comprendre un poussoir 12 disposé dans le passage central 19. Le poussoir peut servir à éviter que la partie de paroi basse découpée ne s'enfonce dans le passage central 19 ou peut servir à former un support pour la partie centrale de la membrane filtre 22 après la perforation ou découpe de la paroi de fond. Dans une première variante, le poussoir est montée de manière fixe à l'intérieure du passage central 19. Dans une deuxième variante, le poussoir est amovible axialement dans la direction A orthogonale à la membrane filtre et actionné par un bras ou axe de piston (non-illustré). Dans cette deuxième variante, après perforation de la partie de paroi basse 30, le poussoir est remonté pour dépasser la lame et venir en appui contre la membrane filtre 22. Ainsi, la membrane filtre 22 est supportée en sa partie centrale, contre la pression du liquide et de la substance dans le volume interne de la capsule lors de l'extraction du boisson. Le poussoir amovible évite également un appui de la membrane filtre 22 contre l'élément perforateur 10 qui pourrait involontairement perforer la membrane filtre.

Dans la forme d'exécution illustrée, le poussoir comprend un anneau périphérique 15 supportant une grille 13 pour le passage du liquide à travers le poussoir. Le poussoir peut toutefois comprendre d'autres formes de grille ou configurations s'étendant sur une partie ou la totalité de la section du passage 19 et ayant des orifices ou ouvertures pour laisser passer le liquide. Avantageusement, cette variante, permet d'avoir un excellent support de la membrane filtre et de pouvoir utiliser une membrane filtre très fine, et donc à faible résistance à l'écoulement du liquide.

La forme ondulée de la partie périphérique 23 de la paroi de fond permet d'avoir une capsule avec une très faible épaisseur de la paroi de fond et également de la paroi latérale, tout en fournissant une rigidité suffisante pour que la coque soit autoportante et pouvant supporter la pression d'extraction. Aussi, la rigidité de la partie périphérique 23 permet d'avoir une partie de paroi basse 30 très mince et pouvant facilement être perforée ou découpée.

La base 8 de la partie perforatrice peut avantageusement comprendre une surface ondulée avec des rayons 5 et des dépressions 7 conforme à la forme de la paroi de fond de la capsule pour une bonne assise et positionnement de la capsule dans la machine. La base ondulée permet aussi de renforcer la stabilité de la paroi de fond de la capsule lors de la perforation de la partie de paroi basse et ensuite de supporter la capsule malgré un certain ramollissement de la matière plastique à la température d'extraction allant jusqu'à 100°C.

### Liste de références dans les figures

2 capsule
   3 volume interne
   16 paroi de fond
      24 partie centrale
         25 partie de paroi basse
      23 partie périphérique
         28 rayons de support
            30 extrémité radialement intérieure
            29 surface supérieure
         26 canaux d'écoulement
      18 paroi latérale paroi (membrane) supérieure
      21 rebord
         20 surface supérieure
      22 membrane filtre
      32 chambre basse
4 partie perforatrice du dispositif
   6 dispositif perforateur
      12 poussoir
         13 grille
         15 anneau
      17 support tubulaire
         14 orifice d'écoulement
         19 canal centrale d'écoulement
      10 élément perforant lame avec dents en scie
         11 interruption
   8 base
      9 orifice
      7 dépressions
      9 rayons

## Revendications

1. Capsule associée à un dispositif perforateur d'une machine pour la préparation d'une boisson par injection d'eau dans la capsule, la capsule comprenant une paroi latérale et une paroi de fond formant une coque autoportante, une paroi supérieure renfermant un volume scellé dans la coque contenant une substance à extraire, et une membrane filtre dans le volume scellé disposé sur la paroi de fond, **caractérisée en ce que** la paroi de fond (16) comprend une partie périphérique (23) et une partie centrale (24) s'étendant sous la membrane filtre d'une profondeur (*H3*) non nulle et comprenant une partie de paroi basse (25) configurée pour être perforée ou découpée par le dispositif perforateur afin de créer un ou plusieurs passages de sortie pour l'écoulement de la boisson traversant la membrane filtre, la partie périphérique comprenant des canaux d'écoulement (26) s'étendant radialement de la partie de paroi basse vers la paroi latérale, interposés entre des rayons de support (28) s'étendant jusqu'au niveau de la membrane filtre et formant des appuis pour la membrane filtre contre la pression de l'eau injectée dans la capsule et pressant sur la substance contenue dans la capsule.

2. Capsule associée à un dispositif perforateur selon la revendication 1 **caractérisée en ce que** les rayons de support (28) et les canaux d'écoulement (26) forment une surface ondulé, les lignes génératrices des ondulations s'étendant essentiellement radialement de la partie centrale jusqu'à la paroi latérale.

3. Capsule associée à un dispositif perforateur selon les revendications 1 et 2, **caractérisée en ce que** des extrémités radialement intérieures (30) des rayons de support (25) entourent une chambre basse (32) permettant à la partie de paroi basse d'être perforée et au dispositif perforateur de s'enfoncer dans la capsule.

4. Capsule associée à un dispositif perforateur selon l'une des revendications précédentes, **caractérisée en ce que** le dispositif perforateur comprend un élément perforant pour l'ouverture du fond de la capsule, l'élément perforant (10) comprenant une lame ayant une forme circulaire, ou essentiellement circulaire configurée pour découper une ouverture dans la partie de paroi basse de la paroi de fond.

5. Capsule associée à un dispositif perforateur selon la revendication précédente, **caractérisée en ce que** la lame comprend des pointes de perforation sous forme de dents de scie.

6. Capsule associée à un dispositif perforateur selon l'une des deux revendications précédentes, **caractérisée en ce que** l'élément perforant est monté sur l'extrémité libre d'un support tubulaire (17) formant un passage central d'écoulement (19).

7. Capsule associée à un dispositif perforateur selon l'une des deux revendications précédentes, **caractérisée en ce que** la lame comprend une interruption (11) de sorte à ce que la lame ne fait pas le tour complet, configurée pour que la partie de paroi basse découpée ne se détache complètement du reste de la paroi de fond.

8. Capsule associée à un dispositif perforateur selon l'une des deux revendications précédentes, **caractérisée en ce que** le dispositif perforateur comprend un poussoir (12) disposé dans le passage central (19).

9. Capsule associée à un dispositif perforateur selon la revendication précédente, **caractérisée en ce que** le poussoir est amovible axialement dans la direction A orthogonale à la membrane filtre configuré pour venir en appui contre la membrane filtre (22) après perforation de la paroi de fond de la capsule.

10. Capsule associée à un dispositif perforateur selon l'une des deux revendications précédentes, **caractérisée en ce que** le poussoir comprend une grille (13) pour le passage du liquide à travers le poussoir.

11. Capsule associée à un dispositif perforateur selon l'une des revendications précédentes, caractérisée en ce le dispositif perforateur comprend une base (8) comprenant une surface ondulée avec des rayons (5) et des dépressions (7) configurée pour une assise et positionnement de la paroi de fond de la capsule.

12. Capsule associée à un dispositif perforateur selon l'une des revendications précédentes, caractérisée en ce le rapport entre le diamètre (*D3*) de la partie centrale (24) par rapport au diamètre (*D4*) de la partie périphérique (23) se situe entre 3/10 et 3/12.

13. Capsule associée à un dispositif perforateur selon l'une des revendications précédentes, caractérisée en ce l'angle d'inclinaison (α*)* des canaux d'écoulement (26) par rapport à la membrane filtre (22) se situe entre 13° et 23°.

14. Capsule associée à un dispositif perforateur selon l'une des revendications précédentes, **caractérisée en ce que** la profondeur d'insertion (*H1*) maximale d'un élément perforateur (10) du dispositif perforateur dans la capsule par rapport à la partie de paroi basse (30) est entre 0,7 et 0,9 fois la profondeur (*H3*) de la partie centrale.

15. Capsule associée à un dispositif perforateur selon l'une des revendications précédentes, **caractérisée en ce que** le rapport *H3*/*D3* de la profondeur *H3* de la partie centrale par rapport au diamètre *D3* de la partie centrale est entre 2/5 et 3/5.

## Patentansprüche

1. Kapsel, die einer Perforiervorrichtung einer Maschine für die Zubereitung eines Getränks durch Einspritzen von Wasser in die Kapsel zugeordnet ist, wobei die Kapsel eine Seitenwand und eine Bodenwand umfasst, die eine selbsttragende Schale bilden, wobei eine obere Wand ein in der Schale versiegeltes Volumen, das eine zu extrahierende Substanz enthält, und eine in dem versiegelten Volumen auf der Bodenwand angeordnete Filtermembran einschließt, **dadurch gekennzeichnet, dass** die Bodenwand (16) einen Umfangsteil (23) und einen zentralen Teil (24) umfasst, der sich unter der Filtermembran in einer Tiefe *(H3)* von nicht null erstreckt und einen Unterwandteil (25) umfasst, der konfiguriert ist, um von der Perforiervorrichtung perforiert oder zerschnitten zu werden, um eine oder mehrere Ausgangsdurchgänge für das Abfließen des die Filtermembran durchquerenden Getränks zu bilden, wobei der Umfangsteil Ablaufkanäle (26) umfasst, die sich radial vom Unterwandteil zur Seitenwand erstrecken, die sich zwischen Stützradien (28) befinden, die sich auf Ebene der Filtermembran erstrecken und Stützen für die Filtermembran gegen den Druck des in die Kapsel eingespritzten Wassers, das auf die in der Kapsel enthaltene Substanz drückt, bilden.

2. Kapsel, die einer Perforiervorrichtung zugeordnet ist, nach Anspruch 1, **dadurch gekennzeichnet, dass** die Stützradien (28) und die Ablaufkanäle (26) eine wellige Fläche bilden, wobei sich die Mantellinien der Wellen im Wesentlichen radial vom zentralen Teil zur Seitenwand erstrecken.

3. Kapsel, die einer Perforiervorrichtung zugeordnet ist, nach den Ansprüchen 1 und 2, **dadurch gekennzeichnet, dass** radial innere Enden (30) der Stützradien (28) eine Unterkammer (32) umgeben, die es dem Unterwandteil erlaubt, perforiert zu werden und der Perforiervorrichtung, sich in die Kapsel einzudrücken.

4. Kapsel, die einer Perforiervorrichtung zugeordnet ist, nach einem der vorangehenden Ansprüche, **dadurch gekennzeichnet, dass** die Perforiervorrichtung für das Öffnen des Bodens der Kapsel ein Perforierelement umfasst, wobei das Perforierelement (10) eine Klinge umfasst, die eine kreisrunde oder im Wesentlichen kreisrunde Form hat, die konfiguriert ist, um eine Öffnung in den Unterwandteil der Bodenwand zu schneiden.

5. Kapsel, die einer Perforiervorrichtung zugeordnet ist, nach vorangehendem Anspruch, **dadurch gekennzeichnet, dass** die Klinge Perforationsspitzen in Form von Sägezähnen umfasst.

6. Kapsel, die einer Perforiervorrichtung zugeordnet ist, nach einem der zwei vorangehenden Ansprüche, **dadurch gekennzeichnet, dass** das Perforierelement auf dem freien Ende einer rohrförmigen Stütze (17) montiert ist, die einen zentralen Fließdurchgang (19) bildet.

7. Kapsel, die einer Perforiervorrichtung zugeordnet ist, nach einem der zwei vorangehenden Ansprüche, **dadurch gekennzeichnet, dass** die Klinge eine Unterbrechung (11) umfasst, die derart ist, dass die Klinge nicht die vollständige Runde macht, die konfiguriert ist, damit sich der abgeschnittene Unterwandteil nicht vollständig vom Rest der Bodenwand löst.

8. Kapsel, die einer Perforiervorrichtung zugeordnet ist, nach einem der zwei vorangehenden Ansprüche, **dadurch gekennzeichnet, dass** die Perforiervorrichtung einen Drücker (12) umfasst, der im zentralen Durchgang (19) angeordnet ist.

9. Kapsel, die einer Perforiervorrichtung zugeordnet ist, nach vorangehendem Anspruch, **dadurch gekennzeichnet, dass** der Drücker axial in die Richtung *A* orthogonal zur Filtermembran bewegbar ist, der konfiguriert ist, um sich auf der Filtermembran (22) nach Perforation der Bodenwand der Kapsel abzustützen.

10. Kapsel, die einer Perforiervorrichtung zugeordnet ist, nach einem der zwei vorangehenden Ansprüche, **dadurch gekennzeichnet, dass** der Drücker ein Gitter (13) für den Durchgang der Flüssigkeit durch den Drücker umfasst.

11. Kapsel, die einer Perforiervorrichtung zugeordnet ist, nach einem der vorangehenden Ansprüche, **dadurch gekennzeichnet, dass** die Perforiervorrichtung eine Basis (8) umfasst, die eine gewellte Fläche mit Radien (5) und Vertiefungen (7) umfasst, die für einen Sitz und Positionierung der Bodenwand der Kapsel konfiguriert ist.

12. Kapsel, die einer Perforiervorrichtung zugeordnet ist, nach einem der vorangehenden Ansprüche, **dadurch gekennzeichnet, dass** das Verhältnis zwischen dem Durchmesser (*D3*) des zentralen Teils (24) zum Durchmesser (*D4*) des Umfangsteils (23) zwischen 3/10 und 3/12 beträgt.

13. Kapsel, die einer Perforiervorrichtung zugeordnet ist, nach einem der vorangehenden Ansprüche, **dadurch gekennzeichnet, dass** der Neigungswinkel (α) der Ablaufkanäle (26) im Verhältnis zur Filtermembran (22) zwischen 13° und 23° beträgt.

14. Kapsel, die einer Perforiervorrichtung zugeordnet ist, nach einem der vorangehenden Ansprüche, **dadurch gekennzeichnet, dass** die maximale Eindringtiefe (*H1*) eines Perforierelements (10) der Perforiervorrichtung in die Kapsel im Verhältnis zum Unterwandteil (30) zwischen dem 0,7- und 0,9 fachen der Tiefe (*H3*) des zentralen Teils beträgt.

15. Kapsel, die einer Perforiervorrichtung zugeordnet ist, nach einem der vorangehenden Ansprüche, **dadurch gekennzeichnet, dass** das Verhältnis *H3*/*D3* der Tiefe *H3* des zentralen Teils zum Durchmesser *D3* des zentralen Teils zwischen 2/5 und 3/5 ist.

## Claims

1. A capsule associated with a perforating device of a machine for preparing a beverage by injecting water into the capsule, the capsule comprising a side wall and a bottom wall forming a self-supporting shell, an upper wall containing a sealed volume in the shell containing a substance to be extracted, and a filter membrane in the sealed volume positioned on the bottom wall, **characterized in that** the bottom wall (16) comprises a peripheral portion (23) and a central portion (24) extending under the filter membrane with non-zero depth (*H3*) and comprising a lower wall portion (25) configured for being perforated or cut out by the perforating device in order to generate one or several exit passages for the flow of the beverage crossing the filter membrane, the peripheral portion comprising flow channels (26) extending radially from the lower wall portion to the side wall, interposed between supporting rails (28) extending up to the level of the filter membrane and forming supports for the filter membrane against the pressure of the water injected into the capsule and pressing on the substance contained in the capsule.

2. The capsule associated with a perforating device according to claim 1, **characterized in that** the supporting rails (28) and the flow channels (26) form a corrugated surface, the generatrix lines of the corrugations extending essentially radially from the central portion as far as the side wall.

3. The capsule associated with a perforating device according to claims 1 and 2, **characterized in that** radially interior ends (30) of the supporting rails (28) surround a low chamber (32) allowing the lower wall portion to be perforated and the perforating device to insert into the capsule.

4. The capsule associated with a perforating device according to one of the preceding claims, **characterized in that** the perforating device comprises a perforating element for opening the bottom of the capsule, the perforating element (10) comprising a blade having a circular or essentially circular shape, configured for cutting out an opening in the low wall portion of the bottom wall.

5. The capsule associated with a perforating device according to the preceding claim, **characterized in that** the blade comprises perforation spikes in the form of saw teeth.

6. The capsule associated with a perforating device according to one of the two preceding claims, **characterized in that** the perforating element is mounted on the free end of a tubular support (17) forming a central flow passage (19).

7. The capsule associated with a perforating device according to any of the two preceding claims, **characterized in that** the blade comprises an interruption (11) so that the blade does not perform a full revolution, configured so that the cut-out low wall portion does not completely detach from the remainder of the bottom wall.

8. The capsule associated with a perforating device according to any of the two preceding claims, **characterized in that** the perforating device comprises a pusher (12) positioned in the central passage (19).

9. The capsule associated with a perforating device according to the preceding claim, **characterized in that** the pusher is axially removable in the direction *A* orthogonal to the filter membrane configured for bearing against the filter membrane (22) after perforation of the bottom wall of the capsule.

10. The capsule associated with a perforating device according to any of the two preceding claims, **characterized in that** the pusher comprises a grid (13) for the passage of the liquid through the pusher.

11. The capsule associated with a perforating device according to any of the preceding claims, **characterized in that** the perforating device comprises a base (8) comprising a corrugated surface with rails (5) and recesses (7) configured for seating and positioning of the bottom wall of the capsule.

12. The capsule associated with a perforating device according to any of the preceding claims, **characterized in that** the ratio between the diameter (*D3*) of the central portion (24) relatively to the diameter (*D4*) of the peripheral portion (23) is located between 3/10 and 3/12.

13. The capsule associated with a perforating device according to any of the preceding claims, **characterized in that** the tilt angle (α) of the flow channels (26) relatively to the filter membrane (22) is located between 13° and 23°.

14. The capsule associated with a perforating device according to any of the preceding claims, **characterized in that** the maximum insertion depth (*H1*) of a perforating element (10) of the perforating device in the capsule relatively to the low wall portion (30) is between 0.7 and 0.9 times the depth (*H3*) of the central portion.

15. The capsule associated with a perforating device according to any of the preceding claims, **characterized in that** the *H3*/*D3* ratio of the depth *H3* of the central portion relatively to the diameter *D3* of the central portion is between 2/5 and 3/5.
